# EUROPÄISCHE PATENTSCHRIFT

(11) **EP 0 963 358 B1**
(45) Veröffentlichungstag und Bekanntmachung des Hinweises auf die Patenterteilung: **19.12.2007**
(21) Anmeldenummer: 98907972.8
(22) Anmeldetag: 22.01.1998
(51) Int. Cl.: C04B 14/06, C04B 30/02, B32B 27/20

(54) **MEHRSCHICHTIGE VERBUNDMATERIALIEN, DIE MINDESTENS EINE AEROGELHALTIGE SCHICHT UND MINDESTENS EINE WEITERE SCHICHT AUFWEISEN, VERFAHREN ZU IHRER HERSTELLUNG SOWIE IHRE VERWENDUNG**
MULTILAYER COMPOSITE MATERIALS WITH AT LEAST ONE AEROGEL-CONTAINING LAYER AND AT LEAST ONE OTHER LAYER, PROCESS FOR PRODUCING THE SAME AND THEIR USE
MATERIAUX COMPOSITES A COUCHES MULTIPLES, DONT AU MOINS UNE COUCHE QUI CONTIENT UN AEROGEL ET AU MOINS UNE AUTRE COUCHE, LEUR PROCEDE DE PRODUCTION ET LEUR UTILISATION

(30) Priorität: 24.01.1997 DE 19702240
(43) Veröffentlichungstag der Anmeldung: 15.12.1999
(73) Patentinhaber: CABOT CORPORATION, Boston, Massachusetts 02210-2019 (US)
(72) Erfinder: SCHWERTFEGER, Fritz, D-60529 Frankfurt (DE); SCHMIDT, Marc, D-60529 Frankfurt am Main (DE); FRANK, Dierk, D-65719 Hofheim (DE)
(74) Vertreter: Luderschmidt, Schüler & Partner
(86) Internationale Anmeldenummer: PCT/EP1998/000329
(87) Internationale Veröffentlichungsnummer: WO 1998/032709

(56) Entgegenhaltungen:
- WO-A-96/15998
- WO-A-97/10187
- DE-A- 4 437 424
- DE-A- 19 507 732

## Beschreibung

Die Erfindung betrifft neuartige, mehrschichtige Verbundmaterialien beliebiger Formgebung mit sehr hohem Wärmedämmvermögen und/oder Körper- und Trittschalldämmvermögen, Verfahren zu ihrer Herstellung sowie ihre Verwendung.

Konventionelle Wärmedämmstoffe bzw. Körper- und Trittschällddmmstoffe auf Basis von Polystyrol, Polyolefinen und Polyurethanen werden unter Verwendung von Treibmitteln, wie z.B. FCKW's, CO₂ oder Pentan hergestellt. Das in den Zellen des Schaumstoffs eingeschlossene Treibmittel ist für das hohe Dämmvermögen verantwortlich. Derartige Treibmittel belasten jedoch die Umwelt, da sie langsam in die Atmosphäre entweichen.

Andere Körperschall- und Trittschalldämmstoffe auf Basis von Mineral- oder Glasfaserwolle können bei ihrer Herstellung, Montage und Demontage sowie während der Dauer Ihres Einsatzes Fasern und/oder Faserbruchstücke emittieren. Dies führt zu einer Belastung der Umwelt und der Menschen, die mit diesen Stoffen umgehen bzw. ihnen ausgesetzt sind.

Aerogele, insbesondere solche mit Porositäten über 60 % und Dichten unter 0,6 g/cm³, sind je nach Herstellungsverfahren transparent, transluzent oder opak und weisen eine äußerst geringe thermische Leitfähigkeit auf. Sie finden deshalb Anwendung als Wärmeisolationsmaterial, wie z. B. in der EP-A-0 171 722 beschrieben.

Aerogele im weiteren Sinn, d.h. im Sinne von "Gel mit Luft als Dispersionsmittel", werden durch Trocknung eines geeigneten Gels hergestellt. Unter den Begriff "Aerogel" in diesem Sinne fallen Aerogele im engeren Sinn, Xerogele und Kryogele. Dabei wird ein getrocknetes Gel als Aerogel im engeren Sinn bezeichnet, wenn die Flüssigkeit des Gels bei Temperaturen oberhalb der kritischen Temperatur und ausgehend von Drücken oberhalb des kritischen Druckes weitestgehend entfernt wird. Wird die Flüssigkeit des Gels dagegen unterkritisch, beispielsweise unter Bildung einer Flüssig-Dampf-Grenzphase entfernt, dann bezeichnet man das entstandene Gel vielfach auch als Xerogel.

Bei der Verwendung des Begriffs Aerogele in der vorliegenden Anmeldung handelt es sich um Aerogele im weiteren Sinn, d.h. im Sinn von "Gel mit Luft als Dispersionsmittel".

Verschiedene Verfahren zur Herstellung von Aerogelen durch über- bzw. unterkritische Trocknung werden z.B. in der EP-A-0 396 076, der WO 92/03378, der WO 94/25149, der WO 92/20623 und der EP-A-0 658 513 offenbart.

Die durch überkritische Trocknung erhaltenen Aerogele sind im allgemeinen hydrophil oder nur kurzzeitig hydrophob, wohingegen unterkritisch getrocknete Aerogele bedingt durch ihre Herstellung (im allgemeinen Silylierung vor der Trocknung) dauerhaft hydrophob sind.

Darüber hinaus lassen sich Aerogele grundsätzlich auch in anorganische und organische Aerogele unterteilen, wobei anorganische Aerogele schon seit 1931 bekannt sind (S.S.Kistler, Nature 1931, 127, 741) und wohingegen organische Aerogele aus den unterschiedlichsten Ausgangsmaterialien, z.B. aus Melaminformaldehyd, erst seit einigen Jahren bekannt sind (R.W. Pekala, J. Mater. Sci. 1989, 24, 3221).

Darüber hinaus kann man aerogelhaltige Verbundmaterialien prinzipiell in opake und transparente/transluzente Verbundmaterialien unterteilen. Sie werden vor allem aufgrund ihrer geringen Wärmeleitung als Wärmedämmaterialien eingesetzt.

Opake, aerogelhaltige Verbundmaterialien werden beispielsweise in der EP-A-0 340 707, der EP-A-0 667 370, der WO 96/12683, der WO 96/15997 und der WO 95/15998 offenbart. Diese Verbundmaterialien enthalten zum Teil zwar transparente Aerogel-Granulate, die zusätzlichen Komponenten sind jedoch opak, wodurch die Systeme insgesamt opak sind.

Transparente, aerogelhaltige Verbundmaterialien werden in der deutschen Patentanmeldung P 196 34 109.4 beschrieben. Dabei werden Aerogel-Partikel mit Hilfe von transparentem und/oder transluzentem Kunststoff als Bindemittel zu einem beliebigen Formkörper verbunden.

Darüber hinaus wird ein transparenter Aerogel-Verbundstoff in der DE-A-44 30 642 und der DE-A-44 30 669 offenbart. Ein solcher Verbundstoff liegt beispielsweise in Form einer Matte vor, die Aerogel und darin verteilte Fasern enthält, wobei die Aerogel-Bruchstücke durch die Fasern zusammengehalten werden. Obgleich mit solchen transparenten Materialien gute Ergebnisse erzielt wurden, bleiben Nachteile preislicher Art sowie die Notwendigkeit die Systeme in einem Schritt herzustellen.

Ein transparentes Bauelement mit mindestens zwei parallel angeordneten Scheiben aus transparentem Material, in deren Zwischenraum sich faserverstärkte Aerogelplatten bzw. -matten befinden, wird z.B. in der deutschen Patentanmeldung 195 07 732.6 offenbart. Durch diese Maßnahme wird die Stabilität des Systems wesentlich erhöht, der komplizierte Aufbau und der hohe Preis bleiben jedoch bestehen.

Eine Alternative zu den aerogelhaltigen Verbundstoffen wird in der CA-C-1 288 313, der EP-A-018 955 und der DE-A 41 06 192 beschrieben. Gemäß diesen Schriften werden Aerogelmonolithe zwischen Glasscheiben gebracht, um die Isolationswirkung durch die geringe Wärmeleitfähigkeit des Aerogels zu verbessern und/oder die Schallschwächung solcher Scheiben zu verbessern.
Auf diese Weise lassen sich zwar annähernd glasklare, transparente Scheiben erzielen, doch ist wegen der geringen mechanischen Stabilität der Aerogele der Aufwand zur Herstellung entsprechend großer Monolithe zu hoch, um solche Glasscheiben in größerem Umfang einsetzen zu können.
Ferner sind mit P,erogel gefüllte Vakuum Panel Systeme bekannt, wie z.B. in der EP-A-0 468 124, der EP-A- 0 1 14 687 und der DE-A-33 47 619 offenbart.
Der Nachteil der Vakuum Panel Systeme ist jedoch, daß sie nicht mehr nachträglich am Ort der Verwendung in Form oder Größe verändert werden können.

Die oben beschriebenen, literaturbekannten, aerogelhaltigen Verbundmaterialien weisen zwar eine geringe Wärmeleitfähigkeit auf, jedoch muß der Anteil der Aerogel-Partikel sehr hoch sein, um Wärmeleitfähigkeiten <50mW/mK zu realisieren. Dadurch sind solche Systeme sehr anfällig gegenüber mechanischer Belastung, was ihre Einsatzfähigkeit sehr einschränkt. Ferner sind sie aufgrund der hohen Kosten, die mit dem Aerogel verbunden sind, sehr teuer. Darüber hinaus werden die Oberflächen solcher Verbundmaterialien und deren Eigenschaften sehr stark vom Aerogel bestimmt, da dieses mehr oder weniger gleichmäßig über das ganze System verteilt ist. Dadurch müssen diese Verbundmaterialien oftmals kaschiert werden, um eine leichte Verarbeitung mit anderen Komponenten im entsprechenden Anwendungsfeld zu gewährleisten. Damit sind jedoch im allgemeinen zusätzliche Herstellungsschritte verbunden.

Eine Aufgabe der vorliegenden Erfindung war es daher, ein aerogelhaltiges, wärmedämmendes Verbundmaterial zu entwickeln, das einfach, sowie in beliebiger Form und Größe hergestellt werden kann, und nicht die oben beschriebenen Nachteile der aus dem Stand der Technik bekannten Systeme aufweist.

Darüber hinaus war es Aufgabe der vorliegenden Erfindung, ein aerogelhaltiges Verbundmaterial zu entwickeln, das bei gleichem Anteil an Aerogel eine bessere Wärmedämmung, d.h. eine geringere Wärmeleitfähigkeit bzw. bei geringerem Anteil an Aerogel eine vergleichbare Wärmedämmung wie herkömmliche Verbundsysteme aufweist.

Eine weitere Aufgabe der vorliegenden Erfindung war die Bereitstellung eines aerogelhaltigen, wärmedämmenden Verbundmaterials, das darüber hinaus auch körper- und/oder trittschalldämmende Eigenschaften besitzt.

Im Rahmen dieser Schrift wird unter Körperschall sich in festen Stoffen ausbreitender Schall verstanden. Unter Trittschall wird der Schall verstanden, der z.B. beim Begehen einer Decke oder Verrücken von Stühlen als Körperschall entsteht und teilweise als Luftschall abgestrahlt wird (Firmenschriff der Rhinolith Dämmstoffe GmbH; Technische Informationen: In 150 Bauphysik 6/96; sowie Reichardt, W.; Grundlagen der technischen Akustik; Akademische Verlagsgesellschaft, Leipzig; 1968).

Die oben beschriebenen Aufgaben werden gelöst durch ein mehrschichtiges Verbundmaterial, das mindestens eine aerogelhaltige Schicht aufweist, die zwischen zwei weiteren Schichten angeordnet ist, wobei die mindestens eine aerogelhaltige Schicht noch mindestens ein organisches Bindemittel enthält und die zwei weiteren Schichten jeweils eine Dicke von mehr als 100 µm aufweisen.

Das erfindungsgemäße mehrschichtige Verbundmaterial weist also mindestens drei Schichten auf.

Dabei handelt es sich um ein Sandwichsystem, bei dem eine aerogelhaltige Schicht zwischen zwei weiteren Schichten angeordnet ist.

Der Anteil der Aerogel-Partikel in der mindestens einen aerogelhaltigen Schicht sollte im allgemeinen im Bereich von 5 bis 97 Vol.-% liegen.

Bei einem Gehalt an Aerogel-Partikeln, der signifikant unter 5 Vol.-% in der mindestens einen aerogelhaltigen Schicht liegt, würde aufgrund des niedrigen Anteils der Aerogel-Partikel im Verbundmaterial deren positive Eigenschaften in hohem Maße verloren gehen. Ein solches Verbundmaterial würde nicht mehr niedrige Dichten und Wärmeleitfähigkeiten aufweisen.

Ein Gehalt an Aerogel-Partikel, der signifikant über 97 Vol.-% liegt, würde zu einem Gehalt an Bindemittel von unter 3 Vol.-% führen. In diesem Fall wäre dessen Anteil zu niedrig, um eine ausreichende Verbindung der Aerogel-Partikel untereinander sowie mechanische Druck- und Biegefestigkeit zu gewährleisten.
In der mindestens einen aerogelhaltigen Schicht liegt der Anteil der Aerogel-Partikel vorzugsweise im Bereich von 40 bis 95 Vol.-% und besonders bevorzugt im Bereich von 60 bis 95 Vol.-%.

Ein besonders hoher Anteil an Aerogel-Partikel in der mindestens einen aerogelhaltigen Schicht des Verbundmaterials läßt sich durch Verwendung einer bimodalen Verteilung der Korngrößen erreichen. Eine weitere Möglichkeit, einen besonders hohen Anteil an Aerogel-Partikel in der mindestens einen aerogelhaltigen Schicht des Verbundmaterials zu erreichen, ist die Verwendung von Aerogel-Partikel, die eine logarithmische Normalverteilung der Korngröße aufweisen.

Um darüber hinaus einen möglichst hohen Füllgrad zu erreichen, ist es ebenfalls günstig, wenn die Aerogel-Partikel klein sind im Verhältnis zur Gesamtdicke der aerogelhaltigen Schicht.

Die Größe der Aerogel-Partikel in der mindestens einen aerogelhaltigen Schicht im Verbundmaterial liegt vorzugsweise im Bereich von 250 µm bis 10 mm, besonders bevorzugt im Bereich von 250 um bis 5 mm und insbesondere im Bereich von 250 µm bis 2 mm. Die Größe der Aerogel-Partikel bezieht sich dabei auf den mittleren Durchmesser des einzelnen Aerogel-Teilchens, da die Aerogel-Teilchen herstellungsbedingt, beispielsweise durch Mahlen, nicht notwendigerweise eine im wesentlichen sphärische Form aufweisen müssen.

Im allgemeinen verwendete Aerogele für die erfindungsgemäßen Verbundmaterialien sind solche auf Basis von Metalloxiden, die für die Sol-Gel-Technik geeignet sind (C.J. Brinker, G.W. Scherer, Sol-Gel-Science. 1990, Kap. 2 und 3), wie beispielsweise Si- oder Al-Verbindungen, oder solche auf der Basis organischer Stoffe, die für die Sol-Gel-Technik geeignet sind, wie z. B. Melaminformaldehydkondensate (US-A-5,086,085) oder Resorcinformaldehydkondensate (US-A-4,873,218). Die Verbundmaterialien können auch auf Mischungen der oben genannten Materialien basieren. Bevorzugt verwendet werden Aerogele, enthaltend Si-Verbindungen und insbesondere SiO₂-Aerogel.

Zur Reduktion des Strahlungsbeitrags der Wärmeleitfähigkeit kann das Aerogel IR-Trübungsmittel, wie z.B. Ruß, Titandioxid, Eisenoxide oder Zirkondioxid sowie Mischungen derselben, enthalten.

In einer bevorzugten Ausführungsform weisen die Aerogel-Partikel dauerhaft hydrophobe Oberflächengruppen auf. Geeignete Gruppen zur dauerhaften Hydrophobisierung sind beispielsweise Silylgruppen der allgemeinen Formel -Si(R)ₙ, wobei n = 1, 2 oder 3 ist, vorzugsweise trisubstituierte Silylgruppen, wobei die Reste R im allgemeinen unabhängig voneinander gleich oder verschieden je ein Wasserstoffatom oder ein nicht reaktiver, organischer, linearer, verzweigter, cyclischer, aromatischer oder heteroaromatischer Rest, vorzugsweise C₁-C₁₈-Alkyl oder C₆-C₁₄-Aryl, besonders bevorzugt C₁-C₆-Alkyl, Cyclohexyl oder Phenyl, insbesondere Methyl oder Ethyl, sind. Besonders vorteilhaft zur dauerhaften Hydrophobisierung des Aerogels ist die Verwendung von Trimethylsilylgruppen. Die Einbringung dieser Gruppen kann, wie z. B. in der WO 94/25149 oder der deutschen Patentanmledung P 196 48 798.6 beschrieben, erfolgen, oder durch Gasphasenreaktion zwischen dem Aerogel und beispielsweise einem aktivierten Trialkylsilanderivat, wie z.B. einem Chlortrialkylsilan oder einem Hexaalkyldisilazan (vergleiche R. Iler, The Chemistry of Silica, Wiley & Sons, 1979), geschehen. Verglichen mit OH-Gruppen vermindern die so hergestellten hydrophoben Oberflächengruppen weiterhin den dielektrischen Verlustfaktor und die Dielektrizitätskonstante.

Aerogel-Partikel mit hydrophilen Oberflächengruppen können je nach Luftfeuchtigkeit Wasser adsorbieren, was dazu führt, daß die Dielektrizitätskonstante und der dielektrische Verlustfaktor mit der Luftfeuchtigkeit variieren können. Dies ist für elektronische Anwendungen oft nicht erwünscht. Die Verwendung von Aerogel-Partikeln mit hydrophoben Oberflächengruppen verhindert diese Variation, da kein Wasser adsorbiert wird. Die Auswahl der Reste richtet sich außerdem nach der typischen Anwendungstemperatur.

Werden Aerogel-Partikel mit hydrophoben Oberflächengruppen in Verbindung mit hydrophoben Bindemitteln verwendet, erhält man ein hydrophobes Verbundmaterial.

Darüber hinaus gilt, daß die thermische Leitfähigkeit der Aerogele mit zunehmender Porosität und abnehmender Dichte abnimmt. Bevorzugt sind deshalb Aerogele mit Porositäten über 60 % und Dichten unter 0,6 g/cm³. Besonders bevorzugt sind Aerogele mit Dichten unter 0,2 g/cm³, ganz besonders bevorzugt sind Aerogele mit Dichten zwischen 0,16 und 0,10 g/cm 3

Das Bindemitel in der mindestens einen aerogelhaltigen Schicht bildet eine Matrix, die die Aerogel-Partikei verbindet bzw. umschließt und sich als durchgehende Phase durch die mindestens eine aerogelhaltige Schicht, sowie gegebenenfalls durch das gesamte Verbundmaterial zieht.

Grundsätzlich sind alle bekannten Bindemittel zur Herstellung der erfindungsgemäßen Verbundmaterialien geeignet. Bindemittel mit niedriger Wärmeleitfähigkeit sind jedoch bevorzugt. Dabei ist nicht entscheidend, ob das Bindemittel amorph, semikristallin und/oder kristallin vorliegt. Das Bindemittel wird entweder in flüssiger Form, d. h. als Flüssigkeit, Schmelze, Lösung, Dispersion oder Suspension verwendet oder aber als festes Pulver eingesetzt.

Bindemittel im Sinne der vorliegenden Erfindung können z.B. sowohl physikalisch abbindende als auch chemisch härtende Einkomponenten-Klebstoffe sowie chemisch härtende Zwei- bzw. Mehrkomponenten-Klebstoffe sein. Als Beispiele für solche Bindemittel seien hier Schmelzklebstoffe, Dispersionsklebstoffe, Lösemittelklebstoffe, Plastisole, wärmehärtende Epoxidharze, reaktive Schmelzklebstoffe wie Ethylenvinylacetat-Copolymere und Polyamide, Formaldehydkondensate, Polyimide, Polybenzimidazole, Cyanocrylate, Polyvinylalkohole, Polyvinylbutyrale, Polyethylenwachse, anaerobe Klebstoffe, feuchtigkeitshärtende Silikone sowie licht- und UVhärtende Systeme, Methacrylate, Zweikomponenten-Silikone, kalthärtende Epoxidharze und kalthärtende Polyurethane genannt.

Weiterhin können Bindemittel im Sinne der vorliegenden Erfindung z.B. auch transparente oder transluzente Kunststoffe wie Polymethylmethacrylate (PMMA, z.B. Degalan^{®}, Plexiglas^{®}), Cycloolefin-Copolymere (COC, z.B. Topas^{®}), Polyvinylbutyrale (z.B. Mowital^{®}), Polycarbonate und Polyethylenterephthalate (PET, z.B. Hostaglas^{®}) sein, wobei Polyvinylbutyrale, Polyvinylalkohole und Polymethylmethacrylate bevorzugt sind.

Darüber hinaus können Bindemittel im Sinne der vorliegenden Erfindung auch fasriger Natur sein, wie z.B. Bikomponentenfasern.

Weiterhin können die Bindemittel auch geschäumt vorliegen.

Das Bindemittel in der mindestens einen aerogelhaltigen Schicht wird im allgemeinen in einer Menge von 3 bis 95 Vol.-% des Verbundmaterials verwendet, vorzugsweise in einer Menge von 3 bis 60 Vol.-%, besonders bevorzugt in einer Menge von 3 bis 40 Vol.-% und insbesondere in einer Menge von 3 bis 20 Vol.-%. Die Auswahl des Bindemittels erfolgt je nach den gewünschten mechanischen und thermischen Eigenschaften des Verbundmaterials. Darüber hinaus wählt man vorzugsweise solche Bindemittel aus, die eine geringe Wärmeleitfähigkeit aufweisen.

Bei der Auswahl der Bindemittel wählt man darüber hinaus vorzugsweise solche Produkte aus, die im wesentlichen nicht in das Innere der porösen Aerogel-Partikel eindringen. Das Eindringen des Bindemittels in das Innere der Aerogel-Partikel kann neben der Auswahl des Bindemittels auch über die Regelung der Temperatur sowie der Verarbeitungszeit beeinflußt werden.

Desweiteren kann die mindestens eine aerogelhaltige Schicht des Verbundmaterials auch noch bis zu 50 Vol.-% Füllstoffe, wie z. B. Holzmehl, Asbest und bevorzugt Cellulose, beispielsweise zur Verbesserung der mechanischen Eigenschaften, enthalten. Vorzugsweise liegt der Anteil der Füllstoffe im Bereich von 0 bis 20 Vol.-%.

Weiterhin kann die mindestens eine aerogelhaltige Schicht des Verbundmaterials auch noch mindestens ein Fasermaterial enthalten. Der Zusatz an Fasern ist insbesondere für thermische Anwendungen und im Hinblick auf Rißbildung und Bruchfestigkeit vorteilhaft. Bevorzugte Fasern sind hier die für solche Zwecke dem Fachmann bekannten Materialien sowie die in der deutschen Patentanmeldung 195 33 564.3 beschriebenen. Die Eigenschaften, Besonderheiten und Mengenverhältnisse in Kombination mit Aerogelen sind in der gleichen Patentanmeldung beschrieben.

Gegenüber einem Material, das nur Aerogel-Partikel enthält, die über ihre Oberflächen durch ein Bindemittel verbunden oder in eine Bindermatrix eingelagert sind, führen überraschenderweise schon geringe Volumenanteile von Fasern bei gleichem Volumenanteil an Bindemittel zu einer wesentlichen mechanischen Verstärkung, da sie wesentliche Teile der Last übernehmen. Wird ein höherer Volumenanteil Fasern verwendet und nur wenig Bindemittel so kann ein poröses Material erhalten werden, in dem die durch das mindestens eine Bindemittel verbundenen Fasern ein mechanisch stabiles Gerüst bilden, in das die Aerogel-Partikel eingelagert sind. Die dann auftretenden Luftporen führen zu einer höheren Porosität und damit verbesserten Schalldämpfung.

Durch das mindestens eine Bindemittel werden entweder die Fasern und Aerogele untereinander und miteinander verbunden oder aber das mindestens eine Bindemittel dient als Matrixmaterial, in das die Fasern und die Aerogel-Partikel eingebettet sind.

Darüber hinaus können in der mindestens einen aerogelhaltigen Schicht des Verbundmaterials in geringen Mengen noch Gleitmittel, wie z. B. Zinkstearat, Pigmente, wie z. B. Titandioxid, Weichmacher, wie z. B. Glycerin und o,p-Toluolsulfonamid und/oder saure bzw. säureabspaltende Härtungsbeschleuniger enthalten sein.

Weiterhin können auch sogenannte "coupling agents" eingesetzt werden. Sie bewirken einen besseren Kontakt des Bindemittels mit der Oberfläche der Aerogel-Partikel und können darüber hinaus eine feste Bindung sowohl mit den Aerogel-Partikeln als auch mit dem Bindemittel eingehen.

Die weiteren Schichten des Verbundmaterials weisen entweder kein Aerogel oder deutlich weniger Aerogel als die mindestens eine aerogelhaltige Schicht auf. Der Anteil der Aerogel-Partikel liegt vorzugsweise im Bereich von 0 bis 40 Vol.-%. Enthalten die weiteren Schichten Aerogel-Partikel, so sind sie bevorzugt wie die mindestens eine aerogelhaltige Schicht aufgebaut, jedoch mit entsprechend geänderten Mengenverhältnissen bezüglich der Aerogel-Partikel und der Bindemittel. Dabei kann jede Schicht aus anderen Materialien zusammengesetzt sein oder andere Mengenverhältnisse aufweisen.

Bevorzugt sind im allgemeinen Materialien, die eine gute und mechanisch stabile Verbindung zu der mindestens einen aerogelhaltigen Schicht gewährleisten. Darüber hinaus sollten diese Schichten aus Materialien bestehen, die ihrerseits eine geringe Wärmeleitfähigkeit aufweisen.

Wenn die weiteren Schichten kein Aerogel enthalten, können sie aus quasi jedem Material bestehen, wenn es sich mit der mindestens einen aerogelhaltigen Schicht verbinden läßt. Hierfür können alle dem Fachmann bekannte Methoden verwendet werden. Bevorzugt sind hier vor allem die Materialien, die auch als Bindemittel in der mindestens einen aerogelhaltigen Schicht enthalten sind sowie Schäume. Als Schäume können alle bekannten Schäume verwendet werden. Bevorzugt sind Schäume auf der Basis von Polyurethanen, Polyolefinen und Polystyrolen, wie in der EP-A 0 667 370 bzw. in der EP-A 0 489 319 offenbart sind. Es können auch beliebige Mischungen von Schäumen vorliegen.

Darüber hinaus sind Materialien bevorzugt, die im Fahrzeug-, Haus-, Wohnungs- und/oder Bürogebäudebau zum Innenausbau eingesetzt werden, wie z.B. Teppich, Estrich, Parkett, Tapete, PVC, Kunststoff, Fliesen und Steine.

Weiterhin kann die mechanische Festigkeit der mehrschichtigen Verbundsysteme durch Auflaminieren von Siebgeweben, Folien oder Hartfaserplatten auf die Plattenoberfläche verbessert werden. Die Siebgewebe, Folien oder Hartfaserplatten können sowohl nachträglich als auch bei der Herstellung des Verbundmaterials aufgebracht werden. Letzteres ist bevorzugt und kann beispielsweise in einem Arbeitsschritt durch Einlegen der Siebgewebe, Folien oder Hartfaserplatten in die Preßform und Auflegen auf die zu verpressende aerogelhaltige Preßmasse und anschließendes Verpressen unter Druck und Temperatur zu einer aerogelhaltigen Verbundplatte erfolgen.

Die Dicke der weiteren Schichten beträgt mehr als 100 µm, vorzugsweise mindestens 500 µm und insbesondere mindestens 1 mm. Trotzdem sollten diese Schichten jedoch dünn sein, insbesondere im Vergleich zu der mindestens einen aerogelhaltigen Schicht, damit die Gesamtwärmeleiffähigkeit des Verbundmaterials möglichst gering ist.

Zur Reduktion des Strahlungsbeitrags der Wärmeleitfähigkeit kann das Verbundmaterial IR-Trübungsmittel, wie z.B. Ruß, Titandioxid, Eisenoxide oder Zirkondioxid sowie Mischungen derselben enthalten, was besonders für Anwendungen bei hohen Temperaturen vorteilhaft ist.

Sollte das Verbundmaterial aufgrund der verwendeten Materialien bzw. Bindemittel und/oder aufgrund von hydrophilen Aerogel-Partikeln hydrophil sein, kann gegebenenfalls eine nachträgliche Behandlung erfolgen, die dem Verbundmaterial hydrophobe Eigenschaften verleiht. Dazu eignen sich alle dem Fachmann für diesen Zweck bekannten Stoffe, die dem Verbundmaterial eine hydrophobe Oberfläche verleihen, wie z. B. Lacke, Folien, Silylierungsmittel. Silikonharze, sowie anorganische und/oder organische Bindemittel.

Die erfindungsgemäßen, mehrschichtigen Verbundmaterialien weisen vorzugsweise eine Dichte von weniger als 0,6 g/cm³ und vorzugsweise eine Wärmeleitfähigkeit von weniger als 100 mW/mK auf. Besonders bevorzugt liegt die Wärmeleitfähigkeit unter 50 mW/mK und insbesondere im Bereich von 15 bis 40 mW/mK.

Die Brandklasse des nach der Trocknung erhaltenen Verbundmaterials wird durch die Brandklasse des Aerogels und/oder der anderen Bestandteile bestimmt. Um eine möglichst günstige Brandklasse des Verbundmaterials zu erhalten (schwer entflammbar oder unbrennbar), verwendet man bevorzugt Materialien, die schwer entflammbar sind. Beispiele hierfür sind Harnstoff- und Melaminformaldehydharze, Silikonharzklebstoffe, Polyimid- und Polybenzimidazolharze, sowie Fasern aus nicht brennbarem Material, wie z.B. Mineral-, Glas- oder SiC-Fasern.

Darüber hinaus können zur Erreichung einer möglichst günstigen Brandklasse alle dem Fachmann bekannten Materialien und Methoden eingesetzt werden, wie z. B. Brandschutzfarben, -lacke, Folien und Kaschierungen.

Zur Herstellung der erfindungsgemäßen, mehrschichtigen Verbundmaterialien können alle dem Fachmann bekannten Methoden und Verfahren angewendet werden.

Bevorzugt werden die mindestens eine aerogelhaltige und die zwei weiteren Schichten entweder gleichzeitig in einem Schritt hergestellt und miteinander verbunden oder getrennt hergestellt und anschließend miteinander verbunden. Das Verbinden kann dabei mittels mindestens einem separatem Bindemittel oder durch das mindestens eine in mindestens einer Schicht verwendete Bindemittel erfolgen.

In der mindestens einen aerogelhaltigen Schicht werden die Aerogel-Partkel mittels mindestens einem Bindemittel miteinander verbunden. Die Verbindung der einzelnen Partikel miteinander kann dabei quasi punktförmig erfolgen. Eine solche oberflächliche Beschichtung kann beispielsweise durch Besprühen der Aerogel-Partikel mit dem Bindemittel erreicht werden. Die beschichteten Partikel werden dann beispielsweise in eine Form eingefüllt und in der Form ausgehärtet.

In einer bevorzugten Ausführungsform wird zusätzlich auch das Zwickelvolumen zwischen den einzelnen Partikeln ganz oder teilweise vom Bindemittel ausgefüllt. Eine solche Zusammensetzung läßt sich beispielsweise herstellen, indem man die Aerogel-Partikel und gegebenenfalls die Fasern mit dem Bindemittel mischt.

Das Mischen kann dabei in jeder nur denkbaren Weise durchgeführt werden. So ist es einerseits möglich, die mindestens zwei Komponenten gleichzeitig in die Mischvorrichtung einzubringen, andererseits kann aber auch eine der Komponenten vorgelegt und die andere(n) dann zugesetzt werden.

Auch die für das Mischen notwendige Mischvorrichtung ist in keinster Weise beschränkt. Es kann jede dem Fachmann für diesen Zweck bekannte Mischvorrichtung verwendet werden.

Der Mischvorgang wird solange durchgeführt, bis eine annähernd gleichmäßige Verteilung der Aerogel-Partikel in der Zusammensetzung vorliegt. Dabei kann der Mischvorgang sowohl über die Zeitdauer, als auch beispielsweise über die Geschwindigkeit der Mischvorrichtung geregelt werden.

Danach erfolgt die Formgebung und das Aushärten des Gemisches in einer Form, was je nach Art des Bindemittels durch Erwärmen und/oder Verdampfen des verwendeten Lösungs- und/oder Dispersionsmittels, oder aber bei Verwendung von Schmelzklebern durch Abkühlen unter die Schmelztemperatur des Bindemittels erfolgt.

In einer bevorzugten Ausführungsform wird das Gemisch verpreßt. Dabei ist es dem Fachmann möglich, für den jeweiligen Anwendungszweck die geeignete Presse und das geeignete Preßwerkzeug auszuwählen. Aufgrund des hohen Luftanteils der aerogelhaltigen Preßmassen ist der Einsatz von Vakuum-Pressen vorteilhaft. In einer bevorzugten Ausführungsform werden die aerogelhaltigen Preßmassen zu Platten verpreßt. Dabei kann auch die mindestens eine weitere Schicht direkt mit verpreßt werden.

Um ein Anbacken der Preßmasse an die Preßstempel zu vermeiden, kann das zu verpressende Gemisch mit Trennpapier gegen die Preßstempel abgetrennt werden. Die mechanische Festigkeit der Verbundmaterialien kann durch Auflaminieren von Siebgeweben. Vliesen oder Papieren auf die Plattenoberfläche verbessert werden. Die Siebgewebe, Vliese bzw. Papiere können sowohl nachträglich auf die Platten aufgebracht werden, wobei die Siebgewebe, Vliese bzw. Papiere zuvor beispielsweise mit Melaminharzen imprägniert werden können und dann in einer beheizbaren Presse unter Druck mit den Plattenoberflächen verbunden werden, als auch, in einer bevorzugten Ausführungsform, in einem Arbeitsschritt durch Einlegen der Siebgewebe, Vliese bzw. Papiere, die gegebenenfalls zuvor mit Melaminharz imprägniert werden können, in die Preßform und Auflegen auf die zu verpressende Preßmasse und anschließend unter Druck und Temperatur zu einer Verbundplatte verpresst werden.

Das Verpressen findet in Abhängigkeit vom verwendeten Bindemittel im allgemeinen bei Pressdrücken von 1 bis 1000 bar und Temperaturen von 0 bis 300° C in beliebigen Formen statt.

Die weiteren Schichten werden analog den aerogelhaltigen Schichten hergestellt, wenn es sich um die gleichen Bindemittel handelt. Werden diese Schichten geschäumt oder enthalten diese Schichten andere Materialien als die aerogelhaltigen Schichten, so können diese nach dem Fachmann bekannten Verfahren hergestellt werden.

Bei den erfindungsgemäßen Verbundmaterialien, die einen besonders hohen Volumenanteil an Aerogel-Partikeln enthalten und deren Wärmeleitfähigkeit entsprechend schlecht ist, kann zusätzlich mit Hilfe geeigneter Strahlungsquellen Wärme in die Platten gebracht werden. Koppelt, wie z.B. im Falle von Polyvinylbutyralen, das verwendete Bindemittel mit Mikrowellen, so ist diese Strahlungsquelle bevorzugt.

Die erfindungsgemäßen Verbundmaterialien eignen sich nach ihrer Härtung aufgrund ihrer geringen Wärmeleitfähigkeit als Wärmeisolationsmaterialien.

Weiterhin eignen sich die Verbundmaterialien als Schaildämmaterialien vorzugsweise zur Körper- bzw. Trittschalldämmung.

Die Erfindung wird im folgenden anhand von Ausführungsbeispielen näher beschrieben, ohne dadurch beschränkt zu werden.

Die hydrophoben Aerogele wurden analog dem in der DE-A-43 42 548 offenbarten Verfahren hergestellt.

Die Wärmeleitfähigkeiten der Aerogel-Granulate wurden mit einer Heizdrahtmethode (siehe z.B. O. Nielsson, G. Rüschenpöhler, J. Groß, J. Fricke. High Temperatures - High Pressures, Vol. 21, 267 - 274 (1989)) gemessen.

Die Wärmeleitfähigkeiten der Formkörper wurden nach DIN 52612 gemessen.

Als Maß für die Verbesserung der Körper- bzw. Trittschalldämmung wurde das Trittschallverbesserungsmaß nach DIN 52210 bestimmt.

### Beispiel 1

### Formkörper aus Aerogel und Polyvinylbutyral

Es werden 80 Vol.-% hydrophobes Aerogel-Granulat und 20 Vol.-% Polyvinylbutyralpulver Mowital^{®} (Polymer F) innig vermischt. Das hydrophobe Aerogelgranulat hat eine Korngröße kleiner 500 µm, eine Schüttdichte von 75 kg/m³, eine BET-Oberfläche von 640 m²/g und eine Wärmeleitfähigkeit von 11 mW/m K.

Der Boden und der Deckel der Preßform mit einer Grundfläche von 30 cm x 30 cm wird mit Trennpapier ausgelegt. Auf dem Boden wird so viel Polyvinylbutyralpulver Mowital^{®} (Polymer F) verteilt, daß sich durch das anschließende Pressen eine 2 mm dicke, kompakte Schicht aus Polyvinylbutyral bildet. Darauf wird die aerogelhaltige Preßmasse gleichmäßig verteilt und noch einmal soviel Polyvinylbutyralpulver Mowital^{®} (Polymer F) darauf gegeben, daß sich auch oben nach dem Pressen eine 2 mm dicke, kompakte Schicht aus Polyvinylbutyral bildet. Anschließend wird bei 220°C für 30 Minuten auf eine Dicke von 18 mm gepreßt.

Der erhaltene Formkörper hat eine Dichte von 380 kg/m³ und eine Wärmeleitfähigkeit von 33 mW/mK. Das Trittschallverbesserungsmaß beträgt 18 dB.

### Beispiel 2

### Formkörper aus Aerogel und Polyvinylbutyral

Es werden 90 Vol.-% hydrophobes Aerogel-Granulat aus Beispiel 1 und 10 Vol.-% Polyvinylbutyralpulver Mowital^{®} (Polymer F) innig vermischt.

Der Boden und der Deckel der Preßform mit einer Grundfläche von 30 cm x 30 cm wird mit Trennpapier ausgelegt. Auf dem Boden wird so viel Polyvinylbutyralpulver Mowital^{®} (Polymer F) verteilt, daß sich durch das anschließende Pressen eine 2 mm dicke, kompakte Schicht aus Polyvinylbutyral bildet. Darauf wird die aerogelhaltige Preßmasse gleichmäßig verteilt und noch einmal soviel Polyvinylbutyralpulver Mowital^{®} (Polymer F) darauf gegeben, daß sich auch oben nach dem Pressen eine 2 mm dicke, kompakte Schicht aus Polyvinylbutyral bildet. Anschließend wird bei 220°C für 30 Minuten auf eine Dicke von 18 mm gepreßt.

Der erhaltene Formkörper hat eine Dichte von 335 kg/m³ und eine Wärmeleitfähigkeit von 26 mW/mK. Das Trittschallverbesserungsmaß beträgt 20 dB.

### Beispiel 3

### Formkörper aus Aerogel und Polyvinylbutyral

Es werden 95 Vol.-% hydrophobes Aerogel-Granulat aus Beispiel 1 und 5 Vol.-% Polyvinylbutyralpulver Mowital^{®} (Polymer F) innig vermischt.

Der Boden und der Deckel der Preßform mit einer Grundfläche von 30 cm x 30 cm wird mit Trennpapier ausgelegt. Auf dem Boden wird so viel Polyvinylbutyralpulver Mowital^{®} (Polymer F) verteilt, daß sich durch das anschließende Pressen eine 2 mm dicke, kompakte Schicht aus Polyvinylbutyral bildet. Darauf wird die aerogelhaltige Preßmasse gleichmäßig verteilt und noch einmal soviel Polyvinylbutyralpulver Mowital^{®} (Polymer F) darauf gegeben, daß sich auch oben nach dem Pressen eine 2 mm dicke, kompakte Schicht aus Polyvinylbutyral bildet. Anschließend wird bei 220°C für 30 Minuten auf eine Dicke von 18 mm gepreßt.

Der erhaltene Formkörper hat eine Dichte von 266 kg/m³ und eine Wärmeleitfähigkeit von 21 mW/mK. Das Trittschallverbesserungsmaß beträgt 22 dB.

### Beispiel 4

### Formkörper aus Aerogel, Polyvinylbutyral und Fasern

Es werden 90 Vol.-% hydrophobes Aerogel-Granulat aus Beispiel 1, 8 Vol.-% Polyvinylbutyralpulver Mowital^{®} (Polymer F) und 2 Vol.-% Trevira^{®} Hochfest Fasern innig vermischt.

Der Boden und der Deckel der Preßform mit einer Grundfläche von 30 cm x 30 cm wird mit Trennpapier ausgelegt. Auf dem Boden wird so viel Polyvinylbutyralpulver Mowital^{®} (Polymer F) verteilt, daß sich durch das anschließende Pressen eine 2 mm dicke, kompakte Schicht aus Polyvinylbutyral bildet. Darauf wird die aerogelhaltige Preßmasse gleichmäßig verteilt und noch einmal soviel Polyvinylbutyralpulver Mowital^{®} (Polymer F) darauf gegeben, daß sich auch oben nach dem Pressen eine 2 mm dicke, kompakte Schicht aus Polyvinylbutyral bildet. Anschließend wird bei 220°C für 30 Minuten auf eine Dicke von 18 mm gepreßt.

Der erhaltene Formkörper hat eine Dichte von 301 kg/m³ und eine Wärmeleitfähigkeit von 22 mW/mK. Das Trittschallverbesserungsmaß beträgt 24 dB.

## Patentansprüche

1. Mehrschichtiges Verbundmaterial, das mindestens eine aerogelhaltige Schicht aufweist, die zwischen zwei weiteren Schichten angeordnet ist, wobei die mindestens eine aerogelhaltige Schicht noch mindestens ein organisches Bindemittel enthält und die zwei weiteren Schichten jeweils eine Dicke von mehr als 100 µm aufweisen.

2. Verbundmaterial gemäß Anspruch 1, **dadurch gekennzeichnet, daß** der Anteil der Aerogel-Partikel in der mindestens einen aerogelhaltigen Schicht im Bereich von 5 bis 97 Vol.-% liegt.

3. Verbundmaterial gemäß Anspruch 1 oder 2, **dadurch gekennzeichnet, daß** die Größe der Aerogel-Partikel im Bereich von 250 µm bis 10 mm liegt.

4. Verbundmaterial gemäß mindestens einem der vorhergehenden Ansprüche, **dadurch gekennzeichnet, daß** als Aerogel-Partikel solche die Si-Verbindungen enthalten, vorzugsweise SiO₂-Aerogele, verwendet werden.

5. Verbundmaterial gemäß mindestens einem der vorhergehenden Ansprüche, **dadurch gekennzeichnet, daß** die Aerogel-Partikel dauerhaft hydrophobe Oberflächengruppen aufweisen.

6. Verbundmaterial gemäß mindestens einem der vorhergehenden Ansprüche, **dadurch gekennzeichnet, daß** die Aerogel-Partikel Porositäten über 60 % und Dichten unter 0,6 g/cm³ aufweisen.

7. Verbundmaterial gemäß mindestens einem der vorhergehenden Ansprüche, **dadurch gekennzeichnet, daß** der Anteil an Bindemittel in der mindestens einen aerogelhaltigen Schicht im Bereich von 3 bis 95 Vol.-% liegt.

8. Verbundmaterial gemäß mindestens einem der vorhergehenden Ansprüche, **dadurch gekennzeichnet, daß** als Bindemittel physikalisch abbindende Einkomponenten-Klebstoffe, chemisch härtende Einkomponenten-Klebstoffe und/oder chemisch härtende Zwei- bzw. Mehrkomponenten-Klebstoffe verwendet.

9. Verbundmaterial gemäß mindestens einem der vorhergehenden Ansprüche, **dadurch gekennzeichnet, daß** die mindestens eine aerogelhaltige Schicht zusätzlich mindestens ein Fasermaterial enthält.

10. Verbundmaterial gemäß mindestens einem der vorhergehenden Ansprüche, **dadurch gekennzeichnet, daß** die mindestens eine aerogelhaltige Schicht bis zu 50 Vol.-% Füllstoffe enthält.

11. Verbundmaterial gemäß mindestens einem der vorhergehenden Ansprüche, **dadurch gekennzeichnet, daß** die mindestens eine weitere Schicht zusätzlich auch Aerogel-Partikel und/oder mindestens ein Bindemittel enthält.

12. Verbundmaterial gemäß mindestens einem der vorhergehenden Ansprüche, **dadurch gekennzeichnet, daß** das Verbundmaterial und/oder die Aerogel-Partikel IR-Trübungsmittel enthält.

13. Verbundmaterial gemäß mindestens einem der vorhergehenden Ansprüche, **dadurch gekennzeichnet, daß** es eine Wärmeleitfähigkeit von weniger als 100 mW/mK aufweist.

14. Verwendung eines Verbundmaterials gemäß mindestens einem der Ansprüche 1 bis 13 zur Wärme- und/oder Schalldämmung.

## Claims

1. Multi-layered composite material which has at least one layer containing aerogel which is arranged between two further layers, wherein the at least one layer containing aerogel also contains at least one organic binder and the two further layers are each of a thickness of more than 100 µm.

2. Composite material according to claim 1, **characterised in that** the proportion of aerogel particles in the at least one layer containing aerogel is in the range from 5 to 97% by volume.

3. Composite material according to claim 1 or 2, **characterised in that** the size of the aerogel particles is in the range from 250 µm to 10 mm.

4. Composite material according to at least one of the foregoing claims, **characterised in that** what are used as aerogel particles are ones which contain Si compounds, preferably Si0₂ aerogels.

5. Composite material according to at least one of the foregoing claims, **characterised in that** the aerogel particles have surface groups which are lastingly hydrophobic.

6. Composite material according to at least one of the foregoing claims, **characterised in that** the aerogel particles have porosities of more than 60% and densities of less than 0.6 g/cm³.

7. Composite material according to at least one of the foregoing claims, **characterised in that** the proportion of binder in the at least one layer containing aerogel is in the range from 3 to 95% by volume.

8. Composite material according to at least one of the foregoing claims, **characterised in that** what are used as binders are single-component adhesives which are cured by physical means, single-component adhesives which cure chemically and/or two-component or multi-component adhesives which cure chemically.

9. Composite material according to at least one of the foregoing claims, **characterised in that** the at least one layer containing aerogel contains in addition at least one fibre material.

10. Composite material according to at least one of the foregoing claims, **characterised in that** the at least one layer containing aerogel contains up to 50% by volume of fillers.

11. Composite material according to at least one of the foregoing claims, **characterised in that** the at least one further layer also contains, in addition, aerogel particles and/or at least one binder

12. Composite material according to at least one of the foregoing claims, **characterised in that** the composite material and/or the aerogel particles contain infrared opacifiers.

13. Composite material according to at least one of the foregoing claims, **characterised in that** it has a thermal conductivity of less than 100 mW/mK.

14. Use of a composite material according to at least one of the claims 1 to 13 for thermal and/or acoustic insulation.

## Revendications

1. Matériau composite à plusieurs couches comprenant au moins une couche contenant un aérogel, disposée entre deux autres couches, dans lequel la au moins une couche contenant un aérogel contient aussi au moins un liant organique et les deux autres couches ont chacune une épaisseur de plus de 100 µm.

2. Matériau composite selon la revendication 1, **caractérisé en ce que** la teneur en particules d'aérogel dans la au moins une couche contenant un aérogel se situe dans la plage de 5 à 97 % en volume.

3. Matériau composite selon la revendication 1 ou 2, **caractérisé en ce que** la taille des particules d'aérogel se situe dans la plage de 250 µm à 10 mm.

4. Matériau composite selon l'une quelconque des revendications précédentes, **caractérisé en ce que** l'on utilise, comme particules d'aérogel, des particules qui contiennent des composés de Si, de préférence des aérogels SiO₂.

5. Matériau composite selon l'une quelconque des revendications précédentes, **caractérisé en ce que** les particules d'aérogel comportent des groupements de surface durablement hydrophobes.

6. Matériau composite selon l'une quelconque des revendications précédentes, **caractérisé en ce que** les particules d'aérogel présentent des porosités supérieures à 60 % et des masses volumiques inférieures à 0,6 g/cm³.

7. Matériau composite selon l'une quelconque des revendications précédentes, **caractérisé en ce que** la proportion de liant dans la au moins une couche contenant un aérogel se situe dans la plage de 3 à 95 % en volume.

8. Matériau composite selon l'une quelconque des revendications précédentes, **caractérisé en ce que** l'on utilise, comme liant, des colles monocomposant à prise physique, des colles monocomposant à durcissement chimique et/ou des colles bi-composant ou multi-composant à durcissement chimique.

9. Matériau composite selon l'une quelconque des revendications précédentes, **caractérisé en ce que** la au moins une couche contenant un aérogel contient en outre au moins un matériau fibreux.

10. Matériau composite selon l'une quelconque des revendications précédentes, **caractérisé en ce que** la au moins une couche contenant un aérogel contient jusqu'à 50 % en volume de charges.

11. Matériau composite selon l'une quelconque des revendications précédentes, **caractérisé en ce qu'**au moins une autre couche contient en outre aussi des particules d'aérogel et/ou au moins un liant.

12. Matériau composite selon l'une quelconque des revendications précédentes, **caractérisé en ce que** le matériau composite et/ou les particules d'aérogel contient/contiennent un opacifiant IR.

13. Matériau composite selon l'une quelconque des revendications précédentes, **caractérisé en ce qu'**il présente une conductivité thermique inférieure à 100 mW/mK.

14. Utilisation d'un matériau composite selon l'une quelconque des revendications 1 à 13 pour l'isolation thermique ou phonique.
